Europäisches Patentamt

European Patent Office

Office européen des brevets

(11) Veröffentlichungsnummer: **0 117 376**
**A1**

(12) **EUROPÄISCHE PATENTANMELDUNG**

(21) Anmeldenummer: 83440055.8

(51) Int. Cl.³: **A 01 D 35/262**

(22) Anmeldetag: 18.11.83

(30) Priorität: 12.01.83 FR 8300492

(43) Veröffentlichungstag der Anmeldung: 05.09.84
Patentblatt 84/36

(84) Benannte Vertragsstaaten: AT BE CH DE LI NL

(71) Anmelder: **Outils Wolf, Société à responsabilité limitée,
Rue de l'Industrie, F-67160 Wissembourg (FR)**

(72) Erfinder: **Der Erfinder hat auf seine Nennung verzichtet**

(74) Vertreter: **Nuss, Pierre, 10, rue Jacques Kablé,
F-67000 Strasbourg (FR)**

(54) **Steuervorrichtung für den Bremsmechanismus des Schneidmessers eines Rasenmähers.**

(57) Steuervorrichtung für den Bremsmechanismus des Schneidmessers eines Rasenmähers, wobei die Spannvorrichtung (8) sowie ihr Winkelhebel (6) durch ein Steuerelement (10) betätigt werden, das einerseits aus einer Drehplatte (11), auf der eine bewegliche, durch eine Feder belastete Feststellklinke (12) und ein schwenkbar angeordneter, mit der Spannvorrichtung (8) und mit dem Hebel (6) verbundener Schwingarm angeordnet sind, und anderseits aus einer auf der Achse der Drehplatte (11) montierten Rasterscheibe (14) besteht, auf die mittels eines Bowdenzuges (15) oder dergleichen ein Steuerhebel (16) wirkt, der an der Lenkstange (17) des Rasenmähers (1) montiert ist, daß mittels einer biegsamen Verbindung (20) die bewegliche Feststellklinke (12) mit einem federbelasteten Hebel am Ende des Auswurfkanals (19) des Rasenmähers (1) verbunden ist, wobei der Sammelkorb (21) oder das Ablenkblech auf den Hebel (18) wirkt, wenn er bzw. es montiert wird, und daß die Drehplatte (11) und die Rasterscheibe (14) unter der Wirkung von elastischen Einrichtungen wie z.B. Rückholfedern oder dergleichen stehen, um sie gleichsinnig zu drehen und zu betätigen.

ACTORUM AG

OUTILS WOLF, société à responsabilité limitée
67160 WISSEMBOURG, Frankreich

Steuervorrichtung für den Bremsmechanismus des Schneidmessers eines Rasenmähers

Die vorliegende Erfindung bezieht sich auf
Sicherheitseinrichtungen für Sichelrasenmäher und insbesondere auf eine Steuerung für den Bremsmechanismus für
das Schneidmesser eines Rasenmähers.

Zur Zeit werden verschiedene Sicherheitseinrichtungen für den Benutzer eines Rasenmähers mit dem Zweck
gebraucht, das Messer vollständig anzuhalten oder mindestens den Motor eines Rasenmähers auf niedrige Drehzahl
zu bringen, wenn der Graskorb oder das Ablenkblech
abmontiert werden sollte, so dass Verletzungen durch
Steinwurf oder durch den Auswurfkanal oder dadurch, dass
jemand in den Arbeitsbereich des Messers unabsichtlich
hineingreift, ausbleiben.

Solche Einrichtungen bestehen meist aus einem
Gestänge und/oder Bowdenzügen, die durch Einwirken auf
den Vergaser die Motordrehzahl verringern oder die eine
Kupplung betätigen, so dass bei der Abnahme des Grasaufnahmebehälters oder des Ablenkbleches das Messer vollkommen
abgeschaltet ist.

Diese Einrichtungen gewährleisten jedoch dann
nicht eine ausreichende Unfallsicherheit, wenn z.B. der Grasbehälter für die Grasaufnahme oder das Ablenkblech nicht einwandfrei eingehakt worden ist, während andererseits das automatische Reduzieren der Motorendrehzahl das Risiko nur vermindert ohne es vollständig zu beheben.

Weiterhin sind elektrische Vorrichtungen bekannt, die den Motorzündkreis unterbrechen, falls sämtliche Sicherheitsvorkehrungen nicht getroffen worden sind, so dass man sich dann der Mühe unterziehen muss, den Motor jedesmal wieder anzulassen.

Bei noch weiteren bekannten Handsteuereinrichtungen, wie z.B. von der Lenkstange aus betätigten Bremskupplungen, kann zwar das Schneidmesser vollkommen angehalten werden. Die Sicherheit des Anwenders wird jedoch nicht gewährleistet, wenn er diese Betätigung vergisst. Weiterhin ist ein unbeabsichtigtes Inbetriebsetzen der Schneidmesser auch bei nicht anmontiertem Grasbehälter oder Ablenkblech immer noch möglich.

Letztlich sind mechanische, bei Aushaken des Sammlers oder des Ablenkbleches wirksame Verschlussvorrichtungen für den Auswurfkanal in Vorschlag gebracht worden. Die Wirksamkeit dieser Einrichtungen wird jedoch bei verstopftem Auswurfkanal vermindert, wobei ihre Funktion gestört wird, so dass bei immer noch drehendem Schneidmesser die Gefahr nicht behoben wird, weil die Einrichtungen nur gegen die Quelle der Gefahr schützen.

Der vorliegenden Erfindung liegt die Aufgabe zugrunde, diese Nachteile zu überwinden.

Die Erfindung hat eine Steuervorrichtung für den Bremsmechanismus des Schneidmessers eines Rasenmähers zum Gegenstand, die das schnelle und zwangsläufige Ausser-Betrieb-Setzen ohne Anhalten des Motors dann gewährleistet, wenn der Sammelbehälter oder das Grasablenkblech aus ihrer Arbeitsstellung zurückgezogen werden.

3

Gemäss der Erfindung ist die Steuervorrichtung, die im wesentlichen aus einer von dem Motor angetriebenen Abtriebsscheibe, aus einer mit dem Schneidmesser drehfest verbundenen, eine zylindrische mit einem Bremsband zusammenwirkende Oberfläche aufweisenden Antriebsscheibe und aus einer Spannvorrichtung besteht, die an einem im Mähergehäuse gelenkig gelagerten Winkelhebel getragen ist, und die den die Abtriebsscheibe mit der Antriebsscheibe verbindenden Antriebsriemen gespannt hält, dadurch gekennzeichnet, dass die Spannvorrichtung sowie ihr Winkelhebel durch ein Steuerelement betätigt werden, das einerseits aus einer Drehplatte, auf der eine bewegliche, durch eine Feder belastete Feststellklinke, und ein schwenkbar angeordneter, mit der Spannvorrichtung und mit dem Hebel verbundener Schwingarm angeordnet sind und andererseits aus einer auf der Achse der Drehplatte montierten Rasterscheibe besteht, auf die mittels eines Bowdenzugs oder dergleichen ein Steuerhebel wirkt, der an der Lenkstange des Rasenmähers montiert ist, dass mittels einer biegsamen Verbindung die bewegliche Feststellklinke mit einem federbelasteten Hebel, am Ende des Auswurfkanals des Rasenmähers verbunden ist, wobei der Sammelkorb oder das Ablenkblech auf den Hebel wirkt, wenn er bzw. es montiert wird, und dass die Drehplatte und die Rasterscheibe unter der Wirkung von elastischen Einrichtungen wie z.B. Rückholfedern oder dergleichen stehen, um sie gleichsinnig zu drehen und zu betätigen.

Gemäss einer Variante der erfindungsgemässen Vorrichtung ist diese dadurch gekennzeichnet, dass das Steuerelement aus einem geradlinig beweglichen Organ besteht, das einen zylindrischen mit dem Rahmen des Rasenmähers fest verbundenen Körper aufweist, innerhalb dessen ein Element gleitbar angeordnet ist, das den

4

Bowdenzug oder dergleichen führt, der mit dem an der Lenkstange des Rasenmähers befestigten Steuerhebel, und dessen Ende den Mantel des Bowdenzuges abstützt, wobei dieses Element mit einer ringförmigen Rille versehen ist, die eine Sperr- und Verschiebungskugel aufnimmt, die im zylindrischen Körper gelagert ist und in der Rille mittels einer Hülse gehalten wird, die am zylindrischen Körper gegen die Wirkung einer Feder gleitbar montiert ist, die mittels der biegsamen Verbindung mit dem federbelasteten, am Ende des Auswurfkanals angeordneten Hebel verbunden ist, und die mit einer ringförmigen Rille versehen ist, die die Sperrkugel in der Freigabestellung des Hebels aufnimmt, wobei ein Anschlag das Verschieben der Hülse in diese Stellung hinein begrenzt und wobei eine Rückholfeder im Entkopplungssinn des Schneidmessers und im Sinn einer Betätigung des Bremsbandes gegen die Wirkung des mit dem Steuerhebel verbundenen Bowdenzuges auf den Winkelhebel der Spannvorrichtung wirkt.

Weitere Einzelheiten und Vorteile der Erfindung sind der nun folgenden näheren Beschreibung einiger bevorzugter Ausführungsbeispiele, die nur zur Erläuterung, nicht aber zur Einschränkung dienen sollen, anhand der schematischen Zeichnungen zu entnehmen. Es zeigen :

Figur 1 eine Draufsicht eines mit der erfindungsgemässen Vorrichtung ausgestatteten Rasenmähers,

Figur 2 eine Detailansicht auf einem grösseren Masstab der Vorrichtung, und

Figur 3 eine in etwa der Figur 2 entsprechende Ansicht einer Variante der erfindungsgemässen Vorrichtung.

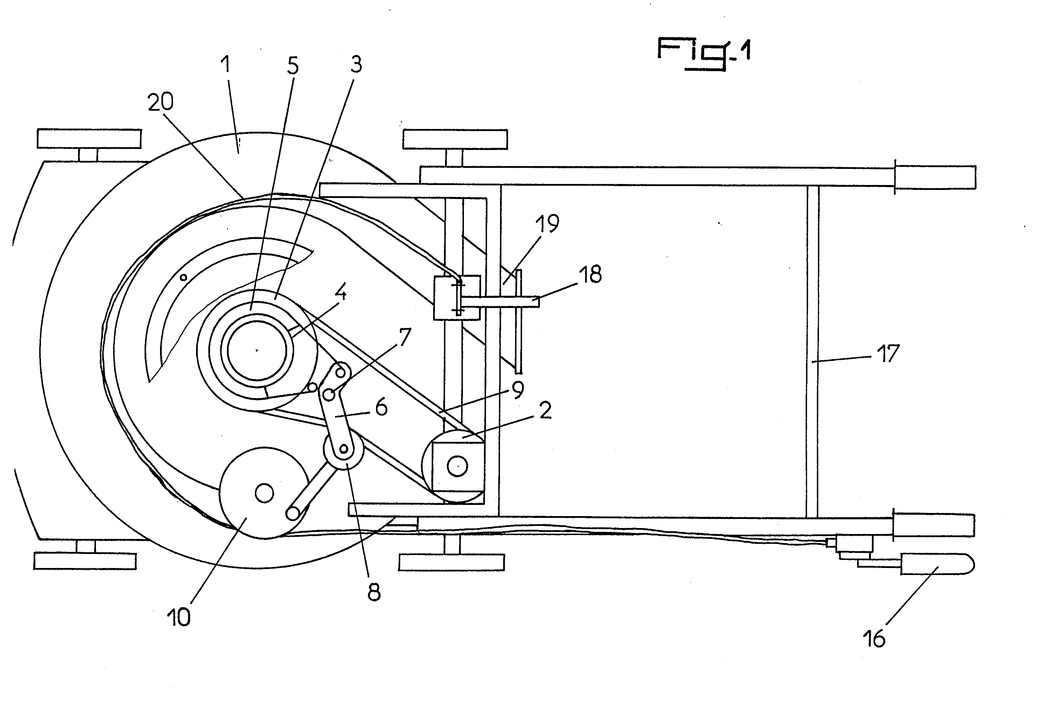

Nur als Beispiel stellt Figur 1 der beiliegenden Zeichnungen einen Rasenmäher 1 dar, der mit einer Steuervorrichtung für den Bremsmechanismus des Schneidmessers eines Rasenmähers ausgestattet ist, wobei diese Vorrichtung eine durch den Motor in Drehung versetzte Abtriebsscheibe 2 und eine drehfest mit dem Schneidmesser verbundene Antriebsscheibe 3 aufweist, deren zylindrische Oberfläche 4 mit dem Bremsband 5 zusammenarbeitet, dessen eines Ende am Gehäuse des Mähers 1 und dessen anderes Ende an einem Winkelhebel 6 befestigt ist. Der Winkelhebel 6 ist schwenkbar bei 7 am Gehäuse abgestützt. Das andere Ende trägt eine Spannvorrichtung 8 zum Spannen des die Abtriebsscheibe 2 mit der Antriebsscheibe 3 verbindenden Riemens 9.

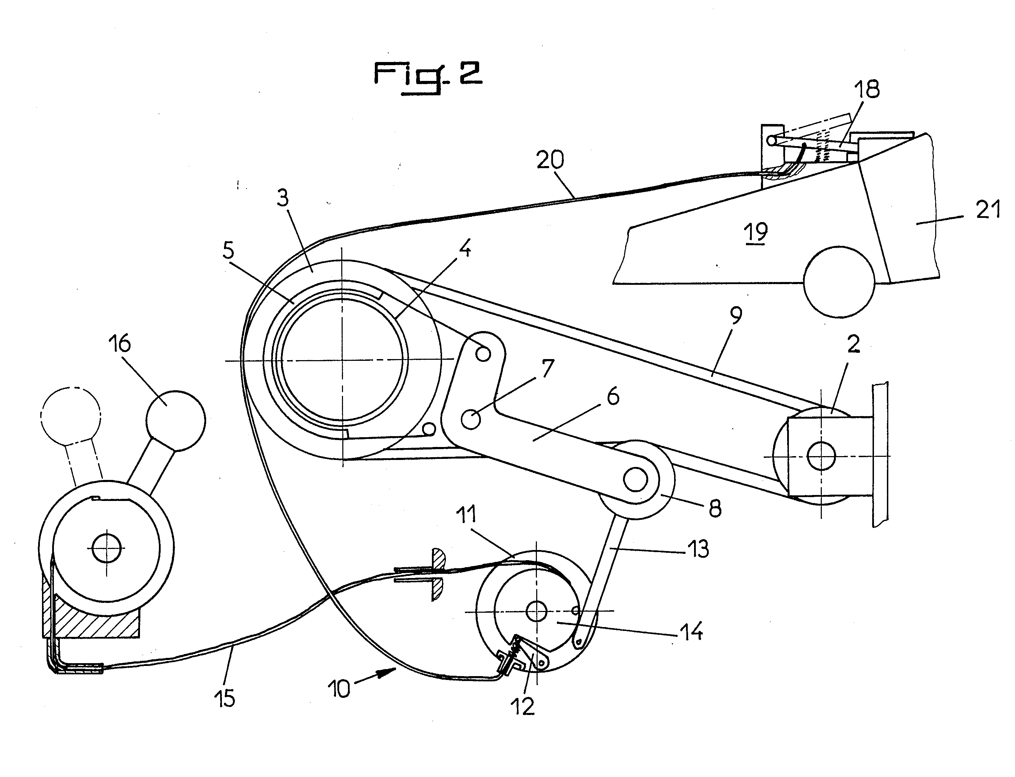

Gemäss der Erfindung stehen die Spannvorrichtung 8 und deren Winkelhebel 6 unter der Wirkung eines Steuerelements 10 das, wie man aus der detaillierten Ansicht gemäss Figur 2 erkennt, eine Drehplatte 11, die eine federbelastete Feststellklinke 12 sowie einen Schwingarm 13 aufweist. Der Schwingarm ist schwenkbar gelagert und mit der Spannvorrichtung 8 und deren Winkelhebel 6 verbunden. Weiterhin weist das Steuerelement eine Rasterscheibe 14 auf, die auf der Achse der Drehplatte 11 gelagert ist.

Mittels eines Bowdenzuges 15 steht die Rasterscheibe 14 unter der Wirkung eines Steuerhebels 14, der an der Lenkstange 17 des Mähers 1 (Figur 1) angebracht ist. Die bewegliche Klinke 12 ist mit einem am Ende des Auswurfkanals 19 angeordneten Hebel 20 gekoppelt. Dieser Hebel 18 wird durch den Sammelkorb 21, wenn er in Stellung gebracht wird, oder durch ein Ablenkblech betätigt.

Weiterhin, um eine automatische Auslösung der Kupplung-Bremseinheit durch die Betätigung des Hebels 16 oder durch die Zurücknahme des Sammelkorbes (oder des Ablenkbleches) zu erreichen, stehen die Drehplatte 11 sowie die Nutscheibe 14 unter der Wirkung eines nicht abgebildeten elastischen Systems, das z.B. als Rückholfeder oder dergleichen ausgebildet sein kann, im Sinne einer identischen Drehbewegung, die z.B. gemäss Figur 2 im Uhrzeigersinn sein kann.

6

Es folgt nun eine Beschreibung der Steuervorrichtung gemäss der vorliegenden Erfindung anhand der Figur 2 der beiliegenden Zeichnungen.

Im nicht betätigten Zustand, d.h. wenn der Hebel 16 sich in der in schwachen Kettenlinien gezeichneten Stellung befindet, ist die Spannvorrichtung 8 freigegeben und das Bremsband 5 unter der Wirkung des Winkelhebels 6 auf die Oberfläche 4 festgezogen, wobei der Winkelhebel 6 durch den Schwingarm 13 angetrieben ist. Der Schwingarm 13 wird im Uhrzeigersinn durch das ihn beaufschlagende elastische System betätigt. Bei nicht montiertem Grassammelkorb 21 oder Ablenkblech wird der Hebel 18 nach oben durch seine Feder geschwenkt und mittels einer über die biegsame Verbindung 20 übertragene Wirkung bringt er die Klinke 12 ausser Eingriff mit der Rille der Scheibe 14. In diesem Fall hat eine Betätigung des Hebels 16, um ihn in die Wirkstellung zu bringen, keine Auswirkung auf die Steuervorrichtung, denn eine Mitnahme der Drehplatte 11 ist nicht möglich.

Nach Anbringen des Korbs 21 oder eines Ablenkblechs wird der Hebel 18 betätigt und veranlasst, dass die Klinke 12 in die Nut der Platte 14 unter der Wirkung der entsprechenden Feder fällt. Dann reicht es aus, wenn man den Hebel 16 in seine in vollen Strichen gezeichnete Wirk- oder Betriebsstellung führt, um die Kupplung dadurch einzulassen, dass die Spannvorrichtung 8 gegen den Riemen zur Wirkung kommt, wobei bei losgelassenem Bremsband 5 das Schneidmesser in Drehung versetzt wird.

Das Abmontieren des Korbs 21 oder des Ablenkbleches sowie eine Schwenkbewegung des Hebels 16 bewirken ein sofortiges Auslösen der Steuervorrichtung.

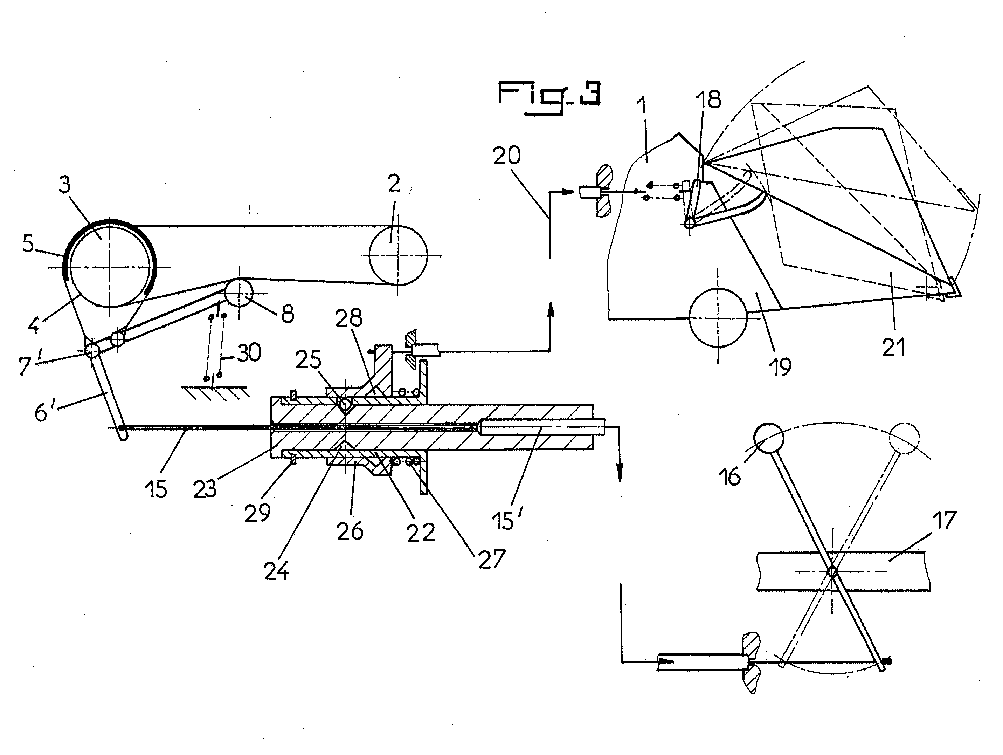

Die Figur 3 zeigt eine weitere Ausführungsform des Steuerelements. In diesem Fall ist letzteres als geradlinig bewegliches Organ konstruiert, das aus einem mit dem Rahmen des Mähers 1 fest verbundenen zylindrischen Körper 22 besteht, in dem ein Element 23 zur Führung des Bowdenzuges 15 (der mit dem an der Lenkstange 17 des Mähers angeordneten Hebel 16 verbunden ist) gleitbar angeordnet ist. Das Ende dieses Elements 23 stützt den Mantel 15' des Bowdenzuges 15 ab, wobei das Element 23 eine ringförmige Rille 24 aufweist, die bei eingelegter Kupplung mit einer im Körper 22 eingesetzten Kugel 25 zur Sperrung der Verschiebungsbewegung zusammenarbeitet. Diese Kugel 25 wird in der Rille 24 mittels einer Hülse 26 gehalten, die gegen die Wirkung einer Feder 27 am Körper 22 gleitet und über die biegsame Verbindung 20 mit dem Hebel 18 verbunden ist. Dieser ist federbelastet und am Ende des Auswurfkanals angebracht. Weiterhin weist die Hülse eine ringförmige Rille 28 auf, die bei Freigabestellung des Hebels 18, d.h. bei abgenommenem Sammelkorb 21 oder Grasablenkblech die Kugel 25 aufnimmt. In dieser Stellung wird die Verschiebung der Hülse 26 durch einen am Körper 22 versehenen Endanschlag 29 begrenzt.

Der Winkelhebel 6' der Spannvorrichtung 8 steht unter Belastung durch eine Rückholfeder 30, deren Wirkung einem Festziehen des Bremsbandes 5 gegen die Oberfläche 4 und einem Auskuppeln durch Schwenkbewegung des Hebels 6' um seine Achse 7' herum gegen die Wirkung des Bowdenzuges 15 entspricht.

Bei montiertem Sammelkorb 21 zieht der Hebel auf die biegsame Verbindung 20 gegen die Wirkung der entsprechenden Feder und bewegt die Hülse 26 unter Zusammendrücken der Feder 27, so dass die Rastkugel 25 in die Rille 24 des Elements einrastet. Die Verschwenkung des Hebels 16 aus seiner in strichpunktierten Linien dargestellten Ruhelage in seine in vollen Linien gezeichnete

8

Betriebslage bewirkt ein Zusammendrücken des Bowdenzugmantels 15' und infolgedessen ein Ziehen des Bowdenzugs auf den Winkelhebel 6', so dass dieser die Spannvorrichtung 8 gegen die Wirkung der Feder 30 in die eingekuppelte Stellung bringt.

Ein Abhaken des Korbs 21 hat die Wirkung, dass eine Verschiebung der Hülse 26 unter der Wirkung der Feder 27 ermöglicht wird, so dass die Rille 28 der Hülse gegenüber des Lagers der Rastkugel 25 zu liegen kommt und die Rastkugel in die Rille 28 deswegen einrasten kann, weil das Element 23 durch die Feder 30 über den Bowdenzug und die Zusammendrückung seines Mantels 15' gezogen wird und das Schneidmesser wird entkoppelt.

Ein erneutes Einkoppeln ist nur durch Schalten des Hebels 16 in seine Ruhestellung und nach einem Einhaken des Korbs 21 sowie einer Zurückstellung des Hebels 16 in seine Betriebsstellung (um einen der beschriebenen automatischen Entkopplung entgegengesetzten Vorgang zu bewirken) möglich.

Dank der Erfindung wird eine Steuervorrichtung für den Bremsmechanismus des Schneidmessers eines Rasenmähers geschaffen, die automatisch und sofort ausgelöst wird, sobald der Korb oder das Ablenkteil abmontiert wird und die, solange der eine oder das andere nicht wieder befestigt ist, eine Drehbewegung des Schneidmessers unterbindet. Des weiteren kann das Schneidmesser nur dadurch, dass der an der Lenkstange 17 angebrachte Hebel 16 betätigt wird, und ebenfalls nur nach Anbringen des Korbs oder eines Ablenkteils in Drehung versetzt werden.

Es ist klar, dass die Erfindung sich nicht auf die beschriebene und anhand der beiliegenden Zeichnungen veranschaulichte Ausführungsform beschränkt. Abänderungen

9

bleiben möglich, die sich insbesondere auf die Gestaltung der verschiedenen Maschinenelemente und auf den Austausch von patentrechtlichen Äquivalenten beziehen können, ohne dadurch den Schutzumfang der Erfindung zu verlassen.

P A T E N T A N S P R U C H E

1. Steuervorrichtung für den Bremsmechanismus des Schneidmessers eines Rasenmähers, die im wesentlichen aus einer von dem Motor angetriebenen Abtriebsscheibe (2), aus einer mit dem Schneidmesser drehfest verbundenen, einer zylindrischen mit einem Bremsband (5) zusammenwirkenden Oberfläche (4) aufweisenden Antriebsscheibe (3) und aus einer Spannvorrichtung (8) besteht, die an einem im Mähergehäuse (1) gelenkig gelagerten Winkelhebel (6) getragen ist, und die den die Abtriebsscheibe (2) mit der Antriebsscheibe (3) verbindenden Antriebsriemen (9) gespannt hält, dadurch gekennzeichnet, dass die Spannvorrichtung (8) sowie ihr Winkelhebel (6) durch ein Steuerelement (10) betätigt werden, das einerseits aus einer Drehplatte (11), auf der eine bewegliche, durch eine Feder belastete Feststellklinke (12), und ein schwenkbar angeordneter, mit der Spannvorrichtung (8) und mit dem Hebel (6) verbundener Schwingarm angeordnet sind, und andererseits aus einer auf der Achse der Drehplatte (11) montierten Rasterscheibe (14) besteht, auf die mittels eines Bowdenzuges (15) oder dergleichen ein Steuerhebel (16) wirkt, der an der Lenkstange (17) des Rasenmähers (1) montiert ist, dass mittels einer biegsamen Verbindung (20) die bewegliche Feststellklinke (12) mit einem federbe- lasteten Hebel am Ende des Auswurfkanals (19) des Rasenmähers (1) verbunden ist, wobei der Sammelkorb (21) oder das Ablenkblech auf den Hebel (18) wirkt, wenn er bzw. es montiert wird, und dass die Drehplatte (11) und die

2

Nutscheibe (14) unter der Wirkung von elastischen Einrichtungen wie z.B. Rückholfedern oder dergleichen stehen, um sie gleichsinnig zu drehen und zu betätigen.

2. Vorrichtung nach Anspruch 1, dadurch gekennzeichnet, dass das Steuerelement (10) aus einem geradlinig beweglichen Organ besteht, das einen zylindrischen mit dem Rahmen des Rasenmähers fest verbundenen Körper (22) aufweist, innerhalb dessen ein Element (23) angeordnet ist, das den Bowdenzug oder dergleichen führt, der mit dem an der Lenkstange (17) des Rasenmähers (1) befestigten Steuerhebel (16), und dessen Ende den Mantel (15') des Bowdenzuges (15) abstützt, wobei dieses Element (23) mit einer ringförmigen Rille (24) versehen ist, die eine Sperr- und Verschiebungskugel (25) aufnimmt, die im zylindrischen Körper (22) gelagert ist und in der Rille (24) mittels einer Hülse (26) gehalten wird, die am zylindrischen Körper (22) gegen die Wirkung einer Feder (27) gleitbar montiert ist, die mittels der biegsamen Verbindung (20) mit dem federbelasteten, am Ende des Auswurfkanals (19) angeordneten Hebel (18) verbunden ist, und die mit einer ringförmigen Rille (28) versehen ist, die die Sperrkugel (25) in der Freigabestellung des Hebels (18) aufnimmt, wobei ein Anschlag (29) das Verschieben der Hülse (26) in diese Stellung hinein begrenzt und wobei eine Rückholfeder (30) im Entkopplungssinn des Schneidmessers und im Sinn einer Betätigung des Bremsbandes (5) gegen die Wirkung des mit dem Steuerhebel (16) verbundenen Bowdenzugs (15) auf den Winkelhebel (6') der Spannvorrichtung (8) wirkt.

Fig.1

0117376

Fig. 2

2/3

0117376

0117376

Fig.3

Europäisches
Patentamt

**EUROPÄISCHER RECHERCHENBERICHT**

Nummer der Anmeldung

0117376

EP 83 44 0055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 195 466 (HEISMANN) <br> * Spalte 4, Zeile 51 - Spalte 5, Zeile 39; Spalte 7, Zeile 9 - Spalte 8, Zeile 18 * | 1,2 | A 01 D 35/262 |
| A | US-A-4 300 332 (JACKSON) <br> * Spalte 3, Zeile 3 - Spalte 6, Zeile 59 * | 1 | |
| A | FR-A-2 078 990 (WOLF) <br> * Ansprüche 1,8,9 * | 1 | |
| A | US-A-4 043 102 (UHLINGER) | | |
| A | US-A-4 345 418 (ARIZPE) | | RECHERCHIERTE SACHGEBIETE (Int. Cl. ³) <br><br> A 01 D |

Der vorliegende Recherchenbericht wurde für alle Patentansprüche erstellt.

| Recherchenort <br> DEN HAAG | Abschlußdatum der Recherche <br> 16-04-1984 | Prüfer <br> DE LAMEILLIEURE D. |
|---|---|---|